# EUROPÄISCHE PATENTSCHRIFT

(11) **EP 2 110 191 B1**
(45) Veröffentlichungstag und Bekanntmachung des Hinweises auf die Patenterteilung: **09.03.2011**
(21) Anmeldenummer: 09005351.3
(22) Anmeldetag: 15.04.2009
(51) Int. Cl.: B21D 51/26, B21D 5/12, B21D 5/14, B23K 11/06

(54) **Rundapparat mit einem gelenkigen Vorrund-Element an der Runstation sowie Verfahren zum Runden von Blechen**
Rounding device with an articulated preliminary rounding element at the rounding station and method for rounding sheet metal
Appareil d'arrondissage avec un elément d'arrondissage préalable sur la station d'arrondissage et procédé d'arrondissage de tôles

(30) Priorität: 18.04.2008 CH 6082008
(43) Veröffentlichungstag der Anmeldung: 21.10.2009
(73) Patentinhaber: Soudronic AG, 8962 Bergdietikon (CH)
(72) Erfinder: Boissin, Guy, 8951 Fahrweid (CH); Schulthess, Oliver, 8610 Uster (CH)
(74) Vertreter: Schalch, Rainer

(56) Entgegenhaltungen:
- WO-A-2008/144946
- DE-A1- 3 330 171
- US-A- 1 990 579
- US-A- 5 209 625

## Beschreibung

### Hintergrund

Die Erfindung betrifft einen Rundapparat zur Rundung von einzelnen Blechen im Durchlauf mit einer Rundstation und einem Vorrund-Element an der Rundstation der Rundapparats, eine Schweissvorrichtung für Dosenzargen mit einem solchen Rundapparat sowie ein Verfahren zum Runden von einzelnen Blechabschnitten zu Behälterzargen-Rohlingen.

### Stand der Technik

Rundapparate werden bei der Herstellung von Behälterzargen, insbesondere Dosenzargen, aus Blech verwendet. Die Behälterzargen-Rohlinge werden dazu nach der Rundung direkt in eine Schweissmaschine zur Schweissung der Längsnaht der Zarge transportiert. Dabei bilden in der Regel die Abstapelung der Bleche, der Rundapparat und die Schweissmaschine eine Einheit. Entsprechende Anlagen für die Dosenherstellung sind z.B. aus DE-A-33 30 171 oder aus US-A-5 209 625 bekannt. Die Rundung erfolgt dabei so, dass die gebildete Dosenzarge direkt in die für die Nahtüberlappung verwendete Z-Schiene geführt werden kann. Für die Rundung werden die rechteckig zugeschnittenen Blechabschnitte mit definierten Abmessungen und in Normen festgehaltenen Materialeigenschaften von einem Einschubsystem in ein erstes, angetriebenes Transportwalzenpaar geschoben, von mehreren angetriebenen Transportwalzen mit einer Geschwindigkeit von 100-450m/Min weitertransportiert und in einem Rundapparat mit einem Rundsystem mit Hilfe von Keilen und Walzen oder mit Walzensystemen zu einer runden Zarge gebogen. Insbesondere kommt vor den Rundwalzen ein Vorrund-Keil zur Anwendung, welcher das Rundungsergebnis beeinflusst. Eventuell erfolgt zusätzlich mittels eines Keilsystems einer optionalen Flexerstation eine vorgängige plastische Verformung, welche dem Spannungsabbau im Blech vor der Rundung dient. Derartige Rundapparate bzw. Anlagen sind dem Fachmann bekannt. Je nach Blechqualität weisen die in Serie verarbeiteten Bleche unterschiedliche Blechdicken und Materialeigenschaften, wie Streckgrenze, Dehnungs- und Verfestigungsverhalten auf, welche nach dem Rundprozess zu unterschiedlichen Zargenradien und dadurch unterschiedlichen Öffnungen an den freien Enden führen. Da dadurch nicht alle in Serie gerundeten Zargen in der gleichen Position in der Rundstation liegen und sie unterschiedliche Rundungsradien aufweisen, kann dies Variationen des Überlappungsmasses in der Schweissstation zur Folge haben, was für die Schweissung der Zarge problematisch ist, oder zu Problemen beim seitlichen Ausschieben der Zargen aus der Rundmaschine in die Schweisseinrichtung und dadurch zu einem Maschinenstopp mit längeren Ausfallzeiten führen. Die Effizienz der Maschine wird dadurch vermindert und es entstehen Ausfallkosten für den Maschinenbetreiber.

Die Einstellung des Vorrund-Keils wird nach Stand der Technik manuell vorgenommen und ist abhängig von den erwähnten Blecheigenschaften, wie Streckgrenze, Blechdicke und auch von der Formatgrösse der Bleche. Wird mit verschiedenen Blechqualitäten gearbeitet, so muss der Vorrund-Keil im Stillstand des Rundapparates jeweils neu justiert werden. WO 2008/144946 A1, die nachveröffentlicht ist, zeigt einen durch einen Aktor betätigbaren Vorrundkeil einer Rundstation.

### Darstellung der Erfindung

Zur Vermeidung der genannten Probleme beim Runden und Schweissen von Dosenzargen werden Bleche mit geringen Materialeigenschaftsschwankungen und aus einer Herstellungsserie des Blechherstellers verwendet. Eine Durchmischung verschiedener Bleche wird möglichst vermieden. Die Rundung muss häufig überprüft und bei Bedarf das Rundsystem und insbesondere der Vorrund-Keil nachjustiert werden, was im Stillstand zu erfolgen hat und die Effizienz des Rundapparates und nachfolgender Schritte vermindert und Ausfallkosten für den Maschinenbetreiber ergibt.

Es ist Aufgabe der Erfindung, diese Nachteile zu verringern.

Dies wird mit einem Rundapparat gemäss Anspruch 1 erzielt, das eine Änderung der Beaufschlagung des zu rundenden Bleches im Betrieb erlaubt.

Bevorzugt ist das Vorrund-Element an der Rundstation, insbesondere ein Vorrundkeil, mit einem Festkörpergelenk versehen, was einen besonders einfachen Aufbau ergibt. Das Festkörpergelenk arbeitet spielfrei und verschleissfrei. Bevorzugt ist das Vorrund-Element mit einem elektrisch steuerbaren Betätigungselement versehen, was eine einfache Ansteuerung und eine rasche Reaktionszeit für die Beaufschlagung der Bleche ergibt.

Das Vorrund-Element kann durch einen Eingabewert oder einen Vorgabewert der Steuerung des Rundapparates gesteuert werden, so dass durch die Bedienungsperson eine Anpassung an verschiedene Blechqualitäten erfolgen kann, oder dass z.B. durch die Eingabe von Blecheigenschaften, wie z.B. dem Blechformat und/oder der Blechdicke, ein vorgegebener Wert für die Einstellung des Vorrund-Elementes abgerufen werden kann. Bevorzugt wird indes ein Messwert der Blecheigenschaft zur Einstellung des Vorrund-Elementes verwendet. Dabei wird besonders bevorzugt im Rundungsbetrieb eine Eigenschaft der Bleche gemessen und das Vorrund-Element wird im Betrieb entsprechend der gemessenen Eigenschaft eingestellt.

Bei einem Rundapparat und einer Schweissvorrichtung gemäss der Erfindung bzw. bei einem Verfahren zum Runden bzw. Schweissen wird daher ein entsprechendes Vorrund-Element an der Rundstation verwendet. Insbesondere ist dabei mindestens eine Messeinrichtung vorgesehen, durch welche mindestens eine Blecheigenschaft messbar ist, so dass ein Messwert der Messeinrichtung oder ein davon abgeleiteter Wert an eine Steuerung des Rundapparates abgebbar ist, und dass das Vorrund-Element des Rundapparates in Abhängigkeit vom Messwert oder von einem davon abgeleiteten Wert steuerbar ist. Dadurch ist ein im Wesentlichen konstanter Rundungsradius bei sich ändernden Blecheigenschaften erzielbar.

Bei einem bevorzugten Verfahren bzw. einer Vorrichtung wird die Messung im Rundungsbetrieb zerstörungsfrei an nacheinander folgenden Blechabschnitten durchgeführt, so dass also im laufenden Rundungsbetrieb gemessen und entsprechend der Messung die Vorrundung eingestellt wird. Die Rundung erfolgt bei der Bildung von Dosenzargen, insbesondere mit einer Rundungsgeschwindigkeit von 100 bis 450 m/Min, und die gerundeten Behälterzargen-Rohlinge werden aus der Rundmaschine einer Schweissvorrichtung für Dosenzargen mit Schweissrollen, insbesondere mit darauf laufenden Drahtzwischenelektroden, und einer Z-Schiene zur Positionierung der Zargenkanten zugeführt. Dabei kann als Blecheigenschaft zum Beispiel die Blechdicke gemessen werden.

Bevorzugt wird als Blecheigenschaft direkt das Rundungsverhalten gemessen bzw. wird die Streckgrenze gemessen, so dass ein direktes Mass für das Verhalten eines oder jedes Blechabschnittes gewonnen wird. Dies kann derart erfolgen, dass auf der Zuführstrecke eine teilweise Blechvorrundung erfolgt oder dass in der Rundmaschine eine teilweise Blechvorrundung erfolgt, insbesondere in der Flexerstation, und dass das Rundungsverhalten elektrisch und/oder mechanisch und/oder optisch und/oder akustisch gemessen wird.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigt
Figur 1 eine Seitenansicht eines Vorrund-Elementes;
Figur 2 schematisch die Anordnung eines Vorrund-Elementes in einem erfindungsgemässen Rundapparat;
Figur 3 bis Figur 11 schematisch weitere Ausgestaltungen von Vorrund-Elementen;
Figur 12 schematisch eine Vorrichtung zur Erläuterung von Ausführungsformen der Erfindung;
Figur 13 eine weitere Vorrichtung;
Figur 14 eine schematische Darstellung einer Messeinrichtung;
Figur 15 eine perspektivische teilweise Darstellung der Messeinrichtung von Figur 14; und
Figur 16 eine Darstellung der elektrischen Beschaltung der Messeinrichtung der Figuren 14 und 15.

### Wege zur Ausführung der Erfindung

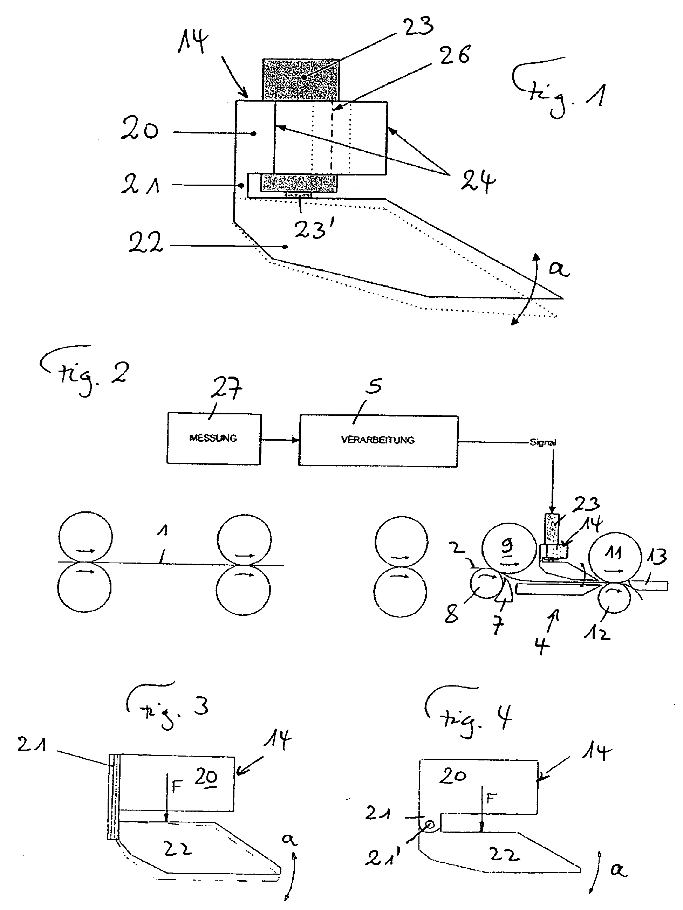

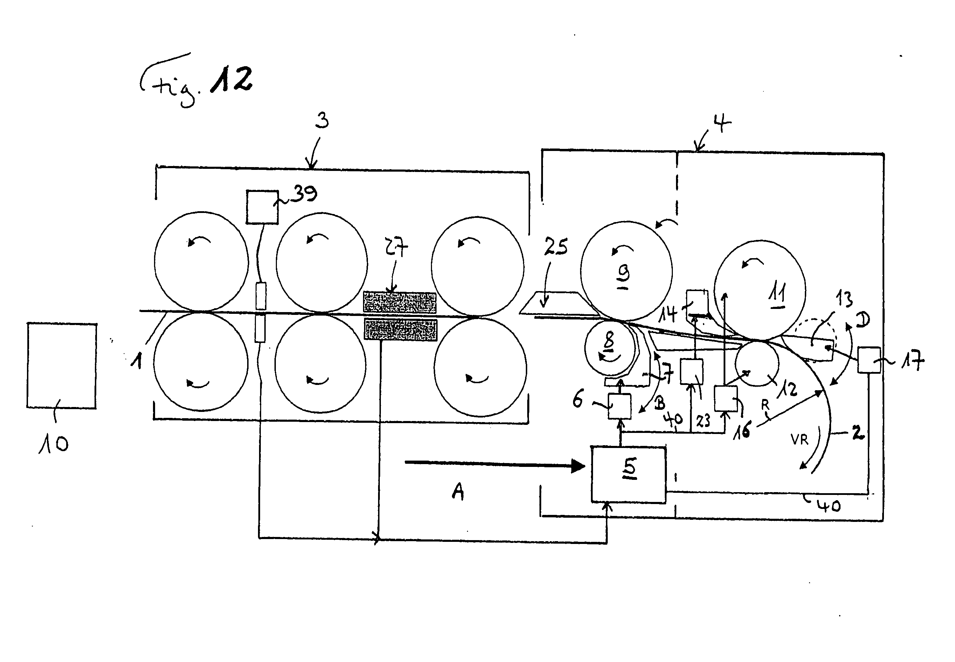

Figur 1 zeigt in Seitenansicht ein Vorrund-Element 14. Dessen Einsatz in einem Rundapparat 4 gemäss der Erfindung ist schematisch in Figur 2 dargestellt. Eine genauere Schilderung eines Rundapparates mit einem Vorrund-Element und mit Messung von Blecheigenschaften erfolgt an Hand der Figuren 12 bis 16.

Das Vorrund-Element 14, welches in der gezeigten Ausführung ein Vorrund-Keil ist, da dessen auf das jeweilige Blech einwirkende Unterteil 22 keilförmig ist, weist ein starres bzw. im Betrieb feststehendes Element-Oberteil 20 auf. Dies ist in dieser Ausführung ein Teil 20, welches zur Befestigung an einem Maschinenteil des Rundapparates ausgeführt ist und im gezeigten Beispiel eine Bohrung 26 und Führungen 24 aufweist, die die Befestigung am Rundapparat erlauben und eine vertikale Grundeinstellung an diesem ermöglichen. Der am Rundapparat maschinenfeste Oberteil 20 könnte auch direkt ein fixer Teil des Rundapparates sein. An diesem Teil bzw. am Oberteil 20 ist über eine Gelenkanordnung der auslenkbare Element-Unterteil 22 bzw. Keilunterteil 22 angeordnet. Die Auslenkung ist durch einen Pfeil a dargestellt. Die Auslenkung wird durch ein Betätigungselement 23 ermöglicht, welches nachfolgend auch als Aktor bezeichnet wird. Der Aktor ist mit seinem ruhenden Teil im Oberteil 20 fest angeordnet und der bewegliche, betätigbare Teil 23' des Aktors wirkt auf den Keilunterteil 22; alternativ ist der bewegliche Teil im Oberteil fixiert und der andere Teil des Aktors wirkt auf den Keilunterteil. Drückt dabei der Teil 23' in der Figur nach unten, so wird der Keilunterteil 22 so ausgelenkt, dass er bei maximaler Auslenkung die punktiert gezeichnete Stellung einnehmen kann. Ist der betätigbare Teil 23' des Aktors 23 in Ruhestellung, so wird die mit durchgezogener Linie gezeigte Stellung des Keils 22 erzielt. Je nach Kraft oder Auslenkung, die der Aktor auf den Keil 22 ausübt, ergibt sich eine Zwischenstellung zwischen den gezeigten Positionen. Die den Oberteil 20 und den Keil 22 verbindende Gelenkanordnung ist in diesem Beispiel ein Festkörpergelenk, das aus einem passend dimensionierten Festkörperteil besteht, der durch die Kraft des Aktors 23 elastisch verformt wird. Entsprechend ergibt sich eine Rückstellung, wenn die Kraft des Aktors oder seine Auslenkung reduziert wird. Bevorzugt ist die Gelenkanordnung 21 als Festkörpergelenk einstückig mit dem Oberteil 20 und dem Unterteil 22 ausgeführt, wie dies in der Figur 1 dargestellt ist. Der Aktor 23 kann ein beliebiger steuerbarer Antrieb sein. Bevorzugt ist ein piezoelektrischer Aktor, da nur kleine Auslenkungen erforderlich sind und eine schnelle Reaktionszeit vorteilhaft ist. Auch andere steuerbare Antriebe, so elektromotorische Antriebe, magnetische Antriebe oder ein pneumatischer Antrieb oder ein hydraulischer Antrieb ist als Betätigungselement 23 einsetzbar.

Figur 2 zeigt schematisch die Zuführung eines Bleches 1 zu einem Rundapparat 4, in welchem sich ein weiteres Blech 2 bereits in Rundung befindet. Die Bleche sind von einem hier nicht dargestellten Stapel abgestapelt worden und werden durchlaufend durch den Rundapparat gerundet. Die Zufuhr in den Rundapparat erfolgt mittels eines Transports, z.B. mit den dargestellten Walzen. Im Rundapparat kann eine Flexerstation mit Flexerwalzen 8 und 9 und einem Flexerkeil 7 vorgesehen sein. Solche Flexerstationen sind bekannt und entfernen einerseits Spannungen aus dem Blech und erzielen andererseits eine Rundung des vorderen Kantenbereichs des jeweiligen Bleches. Insbesondere kann eine nachfolgend näher erläuterte Messeinrichtung, zum Beispiel zur Messung der Rundungseigenschaft des jeweiligen Bleches, an die Flexerstation anschliessen bzw. Teil derselben sein. Auf die Flexerstation folgend ist die eigentliche Rundungsstation des Rundapparates 4 schematisch dargestellt. Diese weist die Rundwalzen 11 und 12 und einen in Transportrichtung darauf folgenden Rundkeil 13 auf. Diese Elemente sind grundsätzlich bekannt und werden hier nicht weiter erläutert. Vor den Rundwalzen ist das erfindungsgemässe Vorrund-Element 14 angeordnet und beaufschlagt das zu rundende Blech. Dies erfolgt gemäss der Erfindung durch den im Rundungsbetrieb auslenkbaren Element-Unterteil 22. Somit kann während der Rundung auf jedes Blech individuell durch das Vorrund-Element 14 eingewirkt werden und es kann das Rundungsergebnis für jedes Blech beeinflusst werden. Dabei wird der Aktor 23 durch ein Signal gesteuert, das aus einer Steuerung 5 stammt. Dies kann die Steuerung des Rundapparates sein oder die Steuerung einer Schweissvorrichtung für Behälterzargen, welche den Rundapparat 4 enthält. Die Steuerung 5 kann aber auch eine separate Steuerung sein, welche allenfalls mit den genannten Steuerungen zusammen arbeitet. Die Steuerung des Vorrund-Elementes 14 erfolgt dabei zum Beispiel durch die Bedienungsperson des Rundapparates, indem diese eine bestimmte Auslenkung des Unterteils 22 über die Steuerung 5 vorgibt. Diese wird dann für alle Bleche eingehalten, bis die Bedienungsperson eine andere Auslenkung einstellt. Die Auslenkung kann andererseits auch von der Steuerung 5 aus gespeicherten Vorgabewerten gewählt werden. Die Bedienungsperson gibt dann z.B. das Blechformat und/oder das Blechmaterial und/oder die Blechdicke und/oder eine Codebezeichnung ein und die Steuerung wählt dazu aus gespeicherten Werten die entsprechende Auslenkung des Element-Unterteils 22 aus. In einer bevorzugten Ausführung erfolgt die Messung mindestens einer Blecheigenschaft durch mindestens eine Messeinrichtung 27 und der Messwert veranlasst die Steuerung 5 zur Einstellung des Aktors 23 bzw. die Auslenkung des Element-Unterteils 22. Die Messung kann dabei bevorzugt für jedes Blech erfolgen und somit kann das Vorrund-Element individuell für jedes Blech der Abfolge von zu rundenden Bleche eingestellt bzw. gesteuert werden. Die Messung kann aber auch nur für einzelne Bleche, z.B. jedes 10. Blech erfolgen oder nur für ein Blech einer Menge von Blechen, z.B. das erste Blech eines Blechstapels. Als Messwert kann z.B. die Blechdicke gemessen werden. Entsprechende Messeinrichtungen sind bekannt und werden hier nicht weiter erläutert. Bevorzugt wird das Rundungsverhalten des Bleches gemessen und für die Steuerung des Vorrund-Elementes 14 verwendet, was nachfolgend genauer erläutert wird.

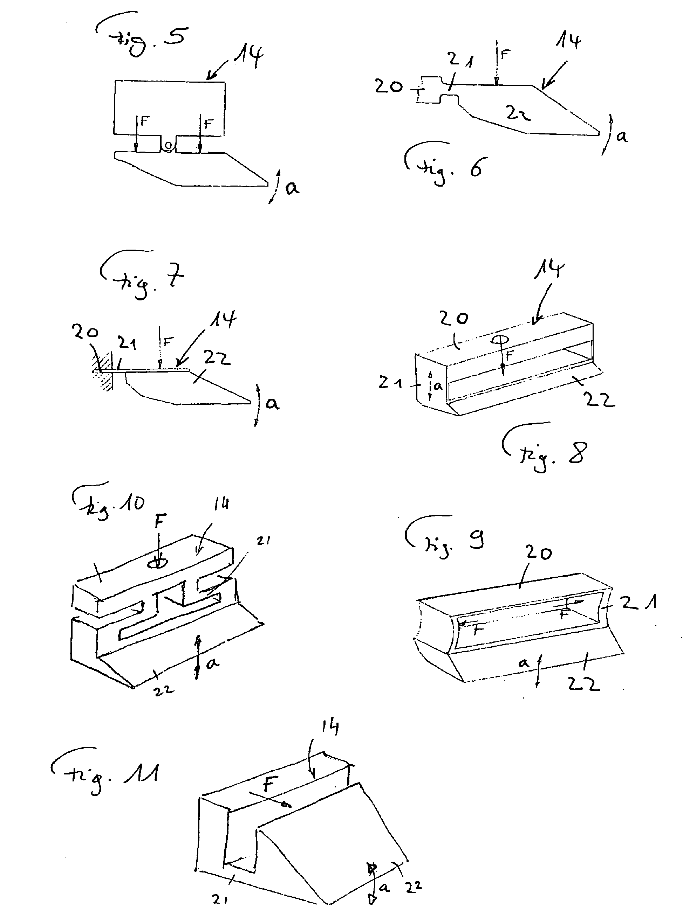

Die Figuren 3 bis 11 zeigen weitere Ausführungsformen des Vorrund-Elementes. Dabei ist zur Vereinfachung der Aktor nicht dargestellt sondern nur durch eine Kraft F symbolisiert. Gemäss Figur 3 weist das Vorrund-Element 14 als Gelenkanordnung 21 ein aus Blattfedern gebildetes Festkörpergelenk auf. Wie das in Figur 1 gezeigte Festkörpergelenk bewirkt es eine selbständige Rückstellung in die Ausgangslage, wenn die Kraftwirkung des Aktors beendet wird. Figur 4 zeigt dahingegen eine Gelenkanordnung 21 mit einem Drehgelenk mit einer Gelenkachse 21'. In diesem Fall wird die Rückstellung durch den Aktor oder durch ein nicht dargestelltes Teil, z.B. eine Rückstellfeder oder durch die Gegenkraft des Bleches auf den Keilunterteil 22 bewirkt. Figur 5 zeigt eine Gelenkanordnung, welche eine wippenartige Bewegung des Element-Unterteils 22 ermöglicht. Figur 6 zeigt ein weiters Festkörpergelenk und zeigt den Element-Oberteil 20 als maschinenfestes Teil des Rundapparates. Dies ist auch in Figur 7 dargestellt, bei welcher die Gelenkanordnung durch eine Blattfeder gebildet wird. Die Vorrund-Elemente 14 der Figuren 8 bis 11 weisen wiederum vorzugsweise einstückige Festkörper-Gelenkanordnungen auf, welche mit elastischer Verformung von Teilen der Vorrund-Elemente 14 arbeiten.

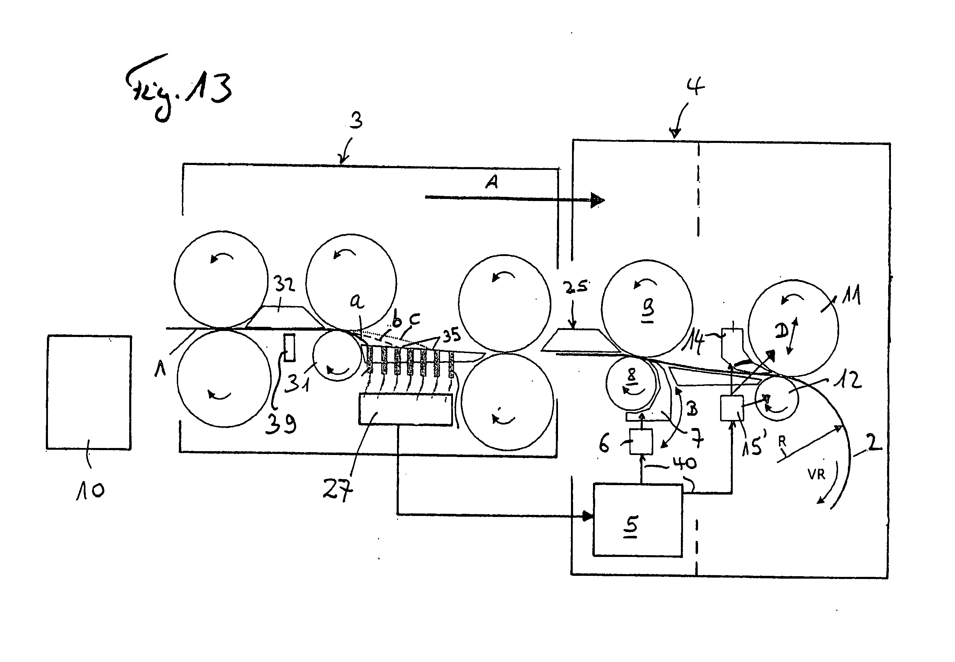

Die Figuren 12 und 13 zeigen schematisch in Seitenansicht verschiedene Ausführungsformen der vorliegenden Erfindung, wobei für die bereits erwähnten Bauteile wiederum dieselben Bezugszeichen verwendet werden. Es ist ersichtlich, dass Blechabschnitte, von denen als Beispiele die Abschnitte 1 und 2 dargestellt sind, von einem Stapel 10 abgestapelt und in eine Transporteinrichtung 3 gegeben werden, welche als Zuführstrecke für einen Rundapparat bzw. eine Rundmaschine 4 dient. Die Bleche durchlaufen dabei diese Anordnung aus Zuführstrecke und Maschine in Richtung des Pfeils A. Die Abstapelung vom Stapel 10 und das Einbringen in die Transporteinrichtung 3 wird hier, da dies dem Fachmann bekannt ist, nicht näher erläutert. Die Transporteinrichtung 3 ist ferner als fakultativ, wenn auch bevorzugt, anzusehen, so dass die Bleche auch direkt vom Stapel 10 in die Rundmaschine 4 abgegeben werden könnten. Dies bedingt dann, dass die Messeinrichtung, welche nachfolgend erläutert wird, am Eingang der Rundmaschine 4 oder in dieser positioniert ist, was ebenfalls noch näher dargestellt wird. Eine Anordnung der Messeinrichtung in der Rundmaschine 4 oder an deren Eingang ist natürlich auch möglich, wenn eine Transporteinrichtung 3 vorhanden ist. In der dargestellten Ausführungsform ist die Transporteinrichtung 3 mit mehreren Walzenpaaren ausgerüstet, welche den jeweiligen Blechabschnitt an den Eingang 25 der Rundmaschine 4 fördern. Diese Förderung könnte auch auf andere, dem Fachmann bekannte Weise ausgeführt werden, als mit den dargestellten Walzenpaaren. In der Rundmaschine 4 wird jeder Blechabschnitt zu einem Zargen-Rohling gerundet, wie dies für den in Durchlaufrichtung vorderen Teil des Blechabschnitts 2 ersichtlich ist. Die Rundung erfolgt dabei mit einem durch die Einstellung der Rundmaschine vorgegebenen Sollrundungsradius und führt zum Rundungsradius R; dies mit einer Rundungsgeschwindigkeit VR von z.B. 100 bis 450 m/Minute. Rundmaschinen sind in vielfältiger Ausführungsform bekannt, insbesondere auch für Dosenzargen, wobei die Rundmaschine in einfacher Form als Zweiwalzen-Rundmaschine mit den beiden Walzen 11 und 12 vorgesehen sein kann. Auch Rundmaschinen mit einer Mehrzahl von Walzen sind bekannt, so z.B. aus der EP-A-1 197 272. Auch derartige Rundmaschinen können im Rahmen der vorliegenden Erfindung verwendet werden, wie auch grundsätzlich beliebige andere Rundmaschinen. Es ist erneut gezeigt, dass vor den Rundwalzen 11 und 12 das Vorrund-Element 14 vorgesehen ist, das in Figur 12 und 13 vereinfacht dargestellt ist, wobei es sich aber um eine der vorgängig erläuterten Ausführungen handelt. Es kann ein Rundkeil 13 nach den Rundwalzen 11, 12 vorgesehen sein, wie in Figur 12 gezeigt, oder es ist kein solcher Rundkeil vorgesehen, wie in Figur 13 gezeigt. Weiter ist es möglich und auch bevorzugt, dass vor der eigentlichen Rundungsstation eine Flexerstation vorgesehen ist, welche in der gezeigten Ausführungsform Teil der Rundmaschine 4 ist, welche aber auch eine separate Station sein könnte. In dem gezeigten Beispiel weist die Flexerstation die Walzen 9 und 8 auf sowie den Flexerkeil 7, welcher auf das aus den Walzen austretende Blech einwirkt. Flexerstationen zur Entfernung von Spannungen im Blech sind als solche grundsätzlich zur Vorbehandlung des Bleches und zur Erleichterung der nachfolgenden Rundung dem Fachmann bekannt, z.B. aus der eingangs erwähnten US 5,209,625, und werden hier als solche nicht weiter erläutert; indes kann die nachfolgend beschriebene Messeinrichtung zur Ermittlung des Rundungsverhaltens in der Flexerstation angeordnet sein und deren Vorrundung zur Ermittlung des Rundungsverhaltens des Bleches verwenden, was noch genauer erläutert wird.

Die einstellbaren Elemente der Rundmaschine, und vorzugsweise auch der Flexerstation, sind bevorzugt mit Antrieben versehen (nachfolgend ebenfalls Aktoren genannt), welche diese Elemente im Rahmen ihrer üblichen Einstellmöglichkeiten bewegen können, um der Steuerung der Rundmaschine einen Einfluss auf das Rundungsergebnis zu ermöglichen; der Einfluss der Aktoren auf die Elemente der Rundmaschine ist in den Figuren durch von den Aktoren ausgehende Pfeile in das jeweilige Element symbolisiert, die Bewegung des Elementes durch einen weiteren Pfeil, die Verbindung der Aktoren mit der Steuerung 5 ist durch Leitungen 40 symbolisiert. So kann der Flexerkeil 7 durch den Aktor 6 in Richtung des Pfeils B bewegt werden. Der Vorrundkeil 14 wird durch den Aktor 23 auf die bereits erläuterte Weise bewegt. Für die Walzen 11 und 12 kann ein deren Abstand zueinander bestimmender Antrieb vorgesehen sein, welche auf eine oder auf beide der Walzen wirkt und welcher als Aktor 16 schematisch dargestellt ist. Ferner kann der Aktor 17 auf den Rundkeil 13 einwirken, um diesen im Sinne des Pfeils D zu bewegen. Es können zusätzlich zum Aktor 23 alle diese Aktoren vorgesehen sein oder keiner oder nur einer derselben und beliebige Kombinationen sind möglich, welche es der Steuerung 5 der Rundmaschine 4 erlauben, über die Ansteuerung der Aktoren und damit die Einstellung der dadurch bewegten Walzen und/oder Rundkeile das Rundungsergebnis bzw. den Rundungsradius R im Betrieb direkt zu beeinflussen. Die Ausgestaltung der entsprechenden Bewegungselemente und Antriebe kann je nach konstruktivem Aufbau der Rundmaschine variieren, ist aber für den Fachmann ohne weiteres ersichtlich. Die Aktoren können auf elektromotorischer, magnetischer, pneumatischer, hydraulischer oder auf piezoelektrischer Basis beruhen, um die jeweiligen Elemente der Rundmaschine zu verstellen. Dies soll, wie erwähnt, während des Betriebes der Rundmaschine möglich sein, um zwischen aufeinander folgenden Blechen, und vorzugsweise sogar bei der Rundung eines Bleches, durch die Steuerung eine Änderung des Rundungsradius zu bewirken. Die Rundmaschine wird dabei in der Regel in einer für die Blechabschnitte des Stapels 10, welche bestimmte Blecheigenschaften aufweisen, geeigneten Grundeinstellung betrieben, welche bei der Einhaltung diese Blecheigenschaften zu dem gewünschten Rundungsradius R führt. Liegen abweichende Blecheigenschaften vor, welche gemäss der Erfindung gemessen werden, was noch erläutert wird, so kann die Steuerung 5 aufgrund der Messung mindestens einen Aktor bedienen, um die Rundungseigenschaften an gemessene, veränderte Blecheigenschaften anzupassen, so dass wiederum das Rundungsergebnis mit dem gewünschten Rundungsradius R erzielt wird. Ist nur einer der Aktoren vorhanden, in diesem Fall der Aktor 23, welcher auf den Vorrundkeil 14 einwirkt, so ist die Änderung durch die Steuerung 5 einfach vollziehbar und diese kann durch wenige Testversuche mit Blechen unterschiedlicher Eigenschaft so eingestellt bzw. programmiert werden, dass für diese unterschiedlichen Bleche das korrekte Resultat erzielt wird. Wird dann bei der Messung im Betrieb erkannt, dass ein Blech mit einem Messwert vorliegt, der einem vorgängig gespeicherten Wert entspricht oder in einem vorgängig gespeicherten Wertebereich für den Messwert liegt, so wird die Steuerung entsprechend den Testversuchen reagieren und die entsprechende Rundkeileinstellung vornehmen, die zum gewünschten Rundungsergebnis für ein Blech mit diesem Messwert führt. Es ist ersichtlich, dass mit dem Vorsehen von mehreren Aktoren und daher mehreren Einflussmöglichkeiten auch die Komplexität der in der Steuerung 5 abgelegten Befehlsvarianten steigt, da diese z.B. entscheiden, ob bei sich ändernder Blecheigenschaft die Einhaltung des gewünschten Radius R über den Vorrundkeil 14 bzw. den Aktor 23 erzielt wird, oder zusätzlich über den Aktor 16 und die Walzenverstellung. Auch dies kann durch Testbleche durch den Maschineneinrichter ermittelt werden und die Steuerung 5 kann entsprechend eingestellt bzw. programmiert werden. Dasselbe gilt für die Variante, bei welcher auch der Flexerkeil 7 mittels eines Aktors einstellbar ist. Da die mittels der entsprechenden Elemente 7, 14, 11 und 12 oder gegebenenfalls 13 erzielbaren Effekte dem Fachmann bzw. der Bedienungsperson für Rundmaschinen bekannt sind, kann diese Person ohne weiteres die Steuerung entsprechend programmieren, damit sie die Änderungen, die sie in bekannter Weise durch Einstellung ausserhalb des Betriebes (offline) für eine bestimmte Blecheigenschaft durchführen würde, auch innerhalb des Betriebes (online) durch die Aktoren durchführen kann.

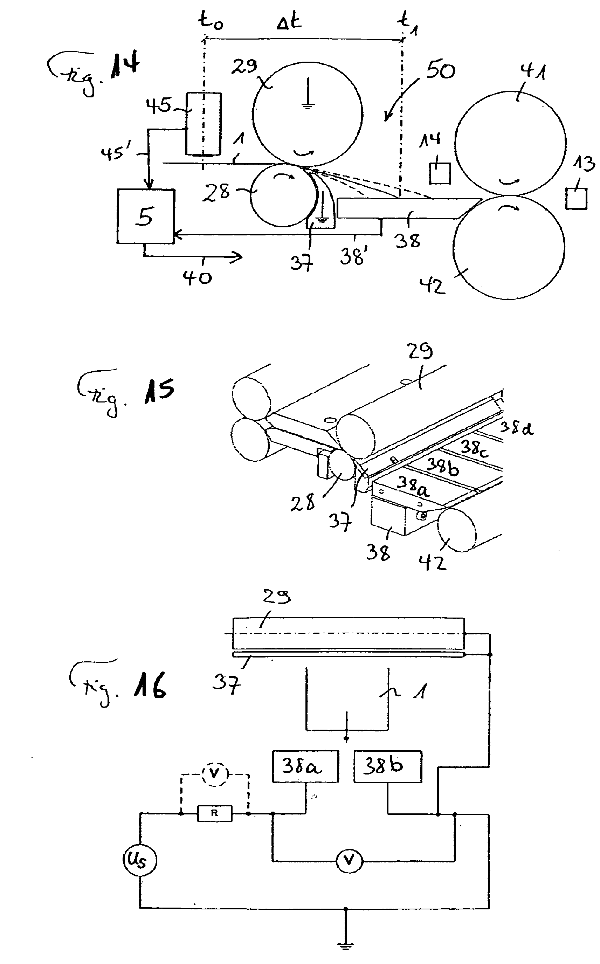

Gemäss Ausführungsbeispielen der Erfindung ist eine Messeinrichtung für die Blechabschnitte vorgesehen, mittels welcher vor dem Runden mindestens eine Eigenschaft des jeweiligen Bleches erfasst werden kann, so dass die Rundmaschine für das Runden dieses Bleches entsprechend eingestellt wird. Die Erfindung umfasst aber auch die Möglichkeit, dass mindestens ein Blech eines Stapels 10 vor der Betriebsaufnahme gemessen wird, insbesondere auch zerstörend gemessen wird, um die Blecheigenschaften der Bleche dieses Stapels zu messen und die Rundmaschine 4 bzw. das Vorrund-Element mittels der Steuerung 5 entsprechend einzustellen. Ein derart vor dem Betrieb das Blech messendes Messgerät ist dann vorzugsweise direkt mit der Steuerung 5 über eine Datenverbindung verbunden, so dass die Steuerung 5 den Messwert oder einen davon abgeleiteten Wert für die Eigenschaft der Bleche des Stapels direkt erhält. Über die Aktoren kann die Steuerung 5 die Rundmaschine entsprechend einstellen. Bevorzugt ist aber ein Vorgehen, bei welchem eine Messung im Rundungsbetrieb erfolgt, wie dies nachfolgend erläutert wird. Bei der gezeigten Ausführungsform von Figur 12 erfolgt eine Messung mindestens einer Blecheigenschaft innerhalb der Zufuhrstrecke 3, welche hier von der gezeigten Transporteinrichtung gebildet wird. Entfällt eine solche Zufuhrstrecke, gelangt das Blech also direkt über einen Abstapler vom Stapel 10 in den Eingangsbereich 25 der Rundmaschine, wo es von dieser erfasst und weitergefördert wird, so erfolgt die Messung der mindestens einen Blecheigenschaft entweder beim Abstapler und/oder direkt beim Eingang oder in der Rundmaschine 4, insbesondere bevorzugt in der Flexerstation. Ein solches Beispiel ist in den Figuren 14 bis 16 dargestellt. Es ist auch möglich, entsprechende Messeinrichtungen bei der Blechschere vorzusehen, welche grosse Blechtafeln in die einzelnen Blechabschnitte zuschneidet. Es wäre dann auch möglich, die Bleche mit einer Markierung zu versehen, z.B. mit einem Zahlencode oder einem Strichcode, welche die gemessenen Blecheigenschaften darstellt, so dass dieser Code in der Zufuhrstrecke 3 oder am Eingang der Rundmaschine 4 oder in dieser gelesen werden kann, worauf die Steuerung auf diese Weise zu dem Messwert oder den Messwerten oder entsprechend abgeleiteten Werten gelangt, welche die Einstellung mindestens des Aktors 23 erlaubt. Im gezeigten Beispiel von Figur 12 ist eine Messeinrichtung 27 dargestellt, welche zwischen den Walzenpaaren der Transportstrecke liegt. Diese Messeinrichtung ist mit der Steuereinrichtung 5 verbunden, so dass der Messwert oder ein abgeleiteter Wert der die Blecheigenschaften angibt, an die Steuerung 5 abgegeben werden kann. Bevorzugt ist die Messeinrichtung 27 eine Einrichtung, welche die Messung der Festigkeit des jeweiligen Blechabschnittes, in der Figur des Blechabschnittes 1, erlaubt. Zum Beispiel handelt es sich dabei um ein berührungslos arbeitendes Messverfahren. Ein bekanntes berührungsloses Messverfahren, welches bei Stahlbändern angewendet wird, und hier neu für einzelne Blechabschnitte angewendet wird, basiert auf einer periodischen Magnetisierung des Metalls und der anschliessenden Messung des Gradienten der magnetischen Restfeldstärke auf der Oberseite und der Unterseite des Bandes bzw. hier des Abschnittes. Der gemessene Wert der magnetischen Restfeldstärke bzw. dem berechneten Gradienten wird über Korrelationsbeziehungen die mechanische Festigkeit des Blechabschnittes zugeordnet, welche insbesondere die Zugfestigkeit und die Streckgrenze des jeweiligen Bleches umfasst. Eine solche Messeinrichtung ist unter der Marke IMPOC® bekannt und im Handel erhältlich und wird von der Firma EMG Automation GmbH, Wenden, Deutschland hergestellt und vertrieben. Mit einer solchen Messeinrichtung lassen sich die Festigkeitseigenschaften der Blechabschnitte ermitteln, welche direkt einen Einfluss auf die Rundungseigenschaften haben, und der entsprechende Messwert wird an die Steuerung 5 abgegeben, welche insbesondere bei Erhöhung oder Erniedrigung der Festigkeitswerte gegenüber einem voreingestellten Sollwert oder Sollwertbereich mindestens einen der Aktoren bedient, um die Rundmaschine an die veränderten Festigkeitswerte im Betrieb anzupassen. Weicht somit der gemessene Festigkeitswert für den Blechabschnitt 1 von einem voreingestellten Sollwert oder Sollwertbereich ab und liegt bei einem anderen voreingestellten Wert oder Wertebereich, für den die Steuerung Anweisungen zur Einstellung der Rundmaschine besitzt, so wird die Steuerung 5 für diesen Blechabschnitt 1 den Aktor 23 für den Vorrundkeil 14 und allenfalls auch den Aktor 17 für den Rundkeil 13 betätigen, nachdem der vorherige Blechabschnitt 2 die Rundwalzen 11,12 verlassen hat, so dass das Rundungsverhalten der Rundmaschine an die gegenüber dem Blech 2 unterschiedliche Festigkeitseigenschaft des Bleches 1 angepasst ist, so dass wiederum der gewünschte Rundungsradius R resultiert, wenn das Blech 1 die Rundmaschine durchläuft. Ebenso wird mit dem nachfolgenden und weiteren nachfolgenden Blechabschnitten verfahren, so dass sich im Betrieb, sofern nötig, eine Anpassung für jeden Blechabschnitt ergibt. Anstelle des erwähnten Produktes INPOC^{®} ist auch ein handelsübliches Produkt 3R-AQC der Firma 3R Technics GmbH, Zürich, Schweiz anwendbar, welches ebenfalls Blecheigenschaften berührungs- und zerstörungsfrei misst, indem durch eine Messspule Wirbelströme im Blech erzeugt und diese wiederum gemessen werden. Aus der Wirbelstrommessung können ebenfalls über Korrelation die mechanischen Festigkeitseigenschaften, wie Härte, Zugfestigkeit, Streckgrenze, des Bleches gemessen werden. Bevorzugt ist die Messeinrichtung 27 aber eine Messeinrichtung, die direkt die Streckgrenze des Bleches bzw. dessen Verformung beim Runden misst, wie dies mit der Messeinrichtung 27 in Figur 13 dargestellt ist, die mit einer Sensoranordnung verschiedene Auftreffstellen des Bleches je nach seinen Rundungseigenschaften feststellt.

Zusätzlich oder anstelle der Messeinrichtung 27 und der weiteren, noch zu erläuternden Messeinrichtungen der Beispiele gemäss den Figuren 14 bis 16, kann eine Messeinrichtung 39 vorgesehen sein, welche auf grundsätzlich dem Fachmann bekannte Weise die Blechdicke des jeweiligen Blechabschnittes misst. Solche Blechdicken-Messgeräte sind ebenfalls bekannt und handelsüblich und werden hier nicht weiter erläutert. Der Ausgangswert der Blechdickenmessung wird der Steuerung 5 zugeführt und wird dort ebenfalls zur Einstellung mindestens eines Aktors und insbesondere auch des Aktors 23 verwendet, um die Rundmaschine 4 an die Blecheigenschaft "Dicke" anzupassen.

Anhand der Figuren 14 bis 16 wird eine bevorzugte Ausführungsform zur Ermittlung des Rundungsverhaltens des jeweiligen Bleches erläutert. Die entsprechende Messeinrichtung 50 kann, wie dies für die zuvor beschriebenen Messeinrichtungen 27, 39 der Fall ist, in der Zuführstrecke 3 angeordnet sein. Sie kann aber auch im eigentlichen Rundapparat angeordnet sein und ist dann bevorzugt ein Teil der Flexerstation bzw. in dieser angeordnet. So können die dargestellten Walzen 28 und 29 der Messeinrichtung anstelle der Walzen 8 und 9 der Flexerstation des Rundapparates treten oder anstelle der Walzen in der Zuführstrecke 3. Für den bevorzugten, da Platz sparenden Fall, dass die Messeinrichtung 50 im Rundapparat angeordnet ist, sind die Walzen 41 und 42 somit die Rundwalzen (entsprechend den Rundwalzen 11 und 12 der vorhergehenden Beispiele) und es ist somit das zuvor beschriebene Vorrund-Element bzw. der Vorrund-Keil 14 vor den Rundwalzen 41, 42 angeordnet, was in Figur 14 lediglich mit dem Rechteck 14 angedeutet ist, wie auch der Rundkeil 13 nur mit dem entsprechend bezeichneten Rechteck angedeutet ist. Auch andere Platzierungen vor dem Rundapparat 4 oder in diesem sind natürlich möglich. In dem gezeigten Beispiel weist die Messeinrichtung 50 einen Flexerkeil 37 auf. Wird die Messeinrichtung somit entsprechend der Messeinrichtung 27, 39 in der Zuführstrecke 3 eingesetzt, so kann dieser Flexerkeil 37 so eingestellt werden, wie der Flexerkeil 7 im Rundapparat. Ist die Messeinrichtung im Rundapparat selber angeordnet, und insbesondere in der Flexerstation, so übernimmt der Flexerkeil 37 der Messeinrichtung direkt auch die Funktion des Flexerkeils 7 des Rundapparates gemäss den vorherigen Beispielen, so dass das Rundungsverhalten mit dem Flexerkeil gemessen wird. Die Messeinrichtung 50 könnte indes auch auf den Flexerkeil 37 verzichten. Die Messeinrichtung weist mindestens einen Sensor 45 auf, mit dem das Ankommen des jeweiligen Bleches 1 bei oder in der Messeinrichtung 50 detektiert werden kann. Insbesondere wird die in Transportrichtung vordere Kante des Bleches detektiert, insbesondere durch einen optischen Sensor, insbesondere eine Lichtschranke oder mehrere Lichtschranken oder durch einen induktiven Näherungsschalter. Diese Erkennung des Bleches 1 startet bei der Messeinrichtung 50 eine Zeitmessung. Diese kann durch ein separates Zeitmessmittel erfolgen oder durch die Steuerung 5, die bereits erwähnt worden ist, und die in diesem Fall auch die Messeinrichtung steuert bzw. Teil derselben ist. Diese Variante ist in Figur 14 dargestellt. Die Zeitmessung wird beendet, wenn die Vorderkante des Bleches auf einer Messplatte 38 auftrifft, was über eine Leitung 38' an die Steuerung 5 gemeldet wird. Wie in Figur 14 in Seitenansicht ersichtlich, ist die Zeit entsprechend dem Rundungsverhalten unterschiedlich und stellt somit ein Mass für das Rundungsverhalten des Bleches dar. Mit diesem Mass wird somit nachfolgend der Rundapparat entsprechend gesteuert, wie dies bereits beschrieben worden ist. In Figur 14 ist dies mit dem Leitungsstrang 40 angedeutet, welcher von der Steuerung 5 auf die vorbeschriebene Weise zu den vorgängig erläuterten Aktoren der Rundmaschine zur Beeinflussung des Rundungsverhaltens führt. Insbesondere wird dadurch der Aktor 23 des Vorrund-Elementes 14 eingestellt, so dass das Vorrund-Element auf Grund der gemessenen Blecheigenschaft eingestellt bzw. gesteuert wird.

Die Erkennung des Auftreffens der Vorderkante des Bleches auf die Messplatte 38 der Messeinrichtung 50 erfolgt vorzugsweise elektrisch. Dies kann so erfolgen, dass die Messplatte auf einem ersten elektrischen Potential liegt und mindestens eine der Walzen 28, 29 auf einem anderen elektrischen Potential liegt (und falls vorhanden auch der Flexerkeil 37 der Messeinrichtung auf dem elektrischen Potential der Walze liegt). Trifft die Vorderkante des elektrisch leitenden Bleches auf die Messplatte 38, so werden die beiden Potentiale kurzgeschlossen, was durch einen entsprechenden Stromfluss oder einen entsprechenden Spannungsabfall der Messspannung festgestellt werden kann. Damit wird die Zeitmessung gestoppt bzw. ist die Zeit zwischen Erkennung der Vorderkante durch den Sensor 45 und das Auftreffen der Vorderkante auf der Messplatte 38 bestimmt und damit die Rundung des Bleches in der Messeinrichtung 50. Bei beschichteten Blechen kann der elektrische Kontakt zwischen den Walzen 28, 29 und ggf. dem Flexerkeil 37 und dem Blech ungenügend sein. Deshalb wird bevorzugt die Messplatte 38 mit einer Mehrzahl von elektrisch voneinander isolierten, nebeneinander liegenden Messteilen 38a, 38b, 38c, 38d usw. ausgeführt, welche abwechslungsweise ebenfalls auf den unterschiedlichen elektrischen Potentialen liegen. Damit ist auch durch das Kurzschliessen von solchen Messteilen durch die Vorderkante des Bleches, die immer unbeschichtet ist, das Auftreffen auf der Messplatte 38 elektrisch detektierbar. Diese Teile können keilförmig ausgestaltet sein, wie in Figur 14 und 15 ersichtlich. Figur 15 zeigt einige der nebeneinander liegenden Messkeile in schaubildlicher Darstellung. Figur 16 zeigt eine entsprechende Messschaltung mit einer Messspannungsquelle Uₛ, wobei die Walzen 28, 29 und der Flexerkeil 37 auf Massepotential liegen. Ebenfalls auf Massepotential liegen die Messkeile 38b, 38d usw. (in Figur 16 ist zur Vereinfachung nur 38b dargestellt). Auf Pluspotential liegen dagegen die Messkeile 38a, 38c usw. (in Figur 16 ist nur 38a dargestellt). Die elektrischen Kurzschlussmöglichkeiten für die Messspannung durch das Auftreffen des Bleches auf der Messplatte 38, wobei die Messspannung detektierbar abfällt und somit die Zeitmessung stoppt, liegen somit beim Kurzschluss Messkeil - Messkeil oder Messkeil - Flexerkeil oder Messkeil - Walze. Die Spannungsabfalldetektion ist durch die Voltmetersymbole in Figur 16 dargestellt.

Das Verfahren und die Vorrichtung kommen insbesondere beim Schweissen von Dosenzargen zur Anwendung.

Während in der vorliegenden Anmeldung bevorzugte Ausführungen der Erfindung beschrieben sind, ist darauf hinzuweisen, dass die Erfindung nicht auf diese beschränkt ist und auch in anderer Weise innerhalb des Umfangs der Ansprüche ausgeführt werden kann.

## Patentansprüche

1. Rundapparat (4) zur rundung von einzelnen Blechen im Durchlauf mit einer Rundstation (11, 12, 13, 14) und einem Vorrund-Element (14) an der Rundstation (11, 12, 13, 14) das Verrund-Element umfassend einen im Wesentlichen starren Element-Oberteil (20), welcher mit Befestigungsmitteln (26) zur Befestigung am Rundapparat ausgestaltet ist, oder welcher von einem apparatefesten Teil des Rundapparates gebildet ist, einen zur Einwirkung auf die im Rundapparat zu rundenden Bleche bestimmten Element-Unterteil (22), **dadurch gekennzeichet, dass** das Vorrund-Element (14) eine Gelenkanordnung (21) umfasst, durch welche das Element-Unterteil (22) gelenkig mit dem Element-Oberteil (20) verbunden ist, sowie mindestens ein Betätigungselement (23) umfasst, durch welches das Element-Unterteil derart auslenkbar ist, dass durch dieses zu rundende Bleche unterschiedlich beaufschlagbar sind.

2. Rundapparat (4) nach Anspruch 1, **dadurch gekennzeichnet, dass** das Element-Unterteil (22) im Wesentlichen als Keil ausgebildet ist.

3. Rundapparat (4) nach Anspruch 1 oder 2, **dadurch gekennzeichnet, dass** das Betätigungselement (23) zur Ausführung einer im Wesentlichen linearen Bewegung in Abhängigkeit von einem elektrischen Eingangssignal ausgestaltet ist.

4. Rundapparat (4) nach einem der Ansprüche 1 bis 3, **dadurch gekennzeichnet, dass** die Gelenkanordnung (21) ein Festkörpergelenk aufweist.

5. Rundapparat (4) nach Anspruch 4, **dadurch gekennzeichnet, dass** das Element-Oberteil (20) und das Element-Unterteil (22) einstückig miteinander verbunden sind.

6. Rundapparat (4) nach Anspruch 4, **dadurch gekennzeichnet, dass** das Element-Oberteil (20) und das Element-Unterteil (22) über eine Blattfederanordnung miteinander verbunden sind.

7. Rundapparat (4) nach einem der Ansprüche 1 bis 3, **dadurch gekennzeichnet, dass** die Gelenkanordnung (21) ein Drehgelenk mit einer Gelenkachse (21') aufweist.

8. Rundapparat (4) nach einem der Ansprüche 1 bis 7 und einer Steuerung (5) zur Betätigung des Vorrund-Elementes (14) in Abhängigkeit von einem Eingabewert und/oder Vorgabewert oder in Abhängigkeit von einem Messwert der Blecheigenschaft einzelner zu rundender Bleche.

9. Rundapparat nach Anspruch 8, wobei die Rundmaschine als Elemente für die Rundung Rundwalzen (11, 12) und gegebenenfalls einen Rundkeil (13) sowie Einstellmittel für diese Elemente umfasst, und wobei der Rundapparat zur Rundung mit einer Geschwindigkeit von 100 bis 450 m/Minute ausgestaltet ist, **dadurch gekennzeichnet, dass** durch die Steuerung (5) des Rundapparates das Vorrund-Element (14) mittels des Betätigungselementes (23) einstellbar ist, und dass die Steuerung (5) einen Eingang für einen Messwert der Blecheigenschaft oder einen davon abgeleiteten Wert aufweist und der Rundapparat eine Messeinrichtung (27) aufweist, mit der als Blecheigenschaft das Rundungsverhalten gemessen wird, wobei die Messung im Rundungsbetrieb zerstörungsfrei an nacheinander folgenden Blechabschnitten durchgeführt wird.

10. Rundapparat nach Anspruch 9, **dadurch gekennzeichnet, dass** das Rundungsverhalten elektrisch und/oder mechanisch und/oder optisch und/oder akustisch messbar ist.

11. Rundapparat nach Anspruch 10, **dadurch gekennzeichnet, dass** das Rundungsverhalten elektrisch gemessen wird, indem beim Durchlauf des Bleches ab einem bestimmten Ort eine Zeitmessung durchführbar und damit die Zeit bestimmbar ist, bis das vorgerundete Blech elektrischen Kontakt mit einer Messplatte (38) hat.

12. Rundapparat nach Anspruch 11, **dadurch gekennzeichnet, dass** die Messplatte (38) in mehrere nebeneinander liegende, elektrisch voneinander isolierte Messteile (38a, 38b, 38c, 38d) unterteilt ist.

13. Schweissvorrichtung für Dosenzargen, mit einer Z-Schiene zur Positionierung der Zargenkanten und mit Schweissrollen, insbesondere mit darauf laufenden Drahtzwischenelektroden, umfassend einen Rundapparat gemäss einem der Ansprüche 8 bis 12.

14. Verfahren zum Runden von Blechen in einem Rundapparat, bei welchem mit einem Vorrund-Element (14) in der Rundstation (11, 12, 13, 14) des Rundapparats jedes Blech beaufschlagt wird und das Vorrund-Element einen im Wesentlichen feststehenden Element-Oberteil (20) mit Befestigungsmitteln zur Befestigung am Rundapparat aufweist oder das Element-Oberteil (20) ein feststehendes Teil des Rundapparates ist, bei welchem ein zur Einwirkung auf die im Rundapparat zu rundenden. Bleche bestimmtes Element-Unterteil (22) vorgesehen ist, **dadurch gekennzeichchnet, dass** eine Gelenkanordnung (21) vorgesehen ist, durch welche das Element-Unterteil gelenkig mit dem Element-Oberteil verbunden ist, sowie mindestens ein Betätigungselement (23) vorgesehen ist, durch welches das Element-Unterteil durch ein Signal gesteuert ausgelenkt wird, wobei das Signal auf einer Messung einer Blecheigenschaft der zu rundenden Bleche beruht.

15. Verfahren nach Anspruch 14, **dadurch gekennzeichnet, dass** als Blecheigenschaft das Rundungsverhalten gemessen wird, wobei die Messung im Rundungsbetrieb zerstörungsfrei an nacheinander folgenden Blechabschnitten durchgeführt wird.

16. Verfahren nach einem der Ansprüche 14 oder 15, **dadurch gekennzeichnet, dass** die Messung in einer Flexerstation des Rundapparates erfolgt.

17. Verfahren nach Anspruch 15 oder 16, **dadurch gekennzeichnet, dass** das Rundungsverhalten elektrisch und/oder mechanisch und/oder optisch und/oder akustisch gemessen wird.

18. Verfahren nach Anspruch 15, **dadurch gekennzeichnet, dass** das Rundungsverhalten elektrisch gemessen wird, indem beim Durchlauf des Bleches dieses an einem vorbestimmten Ort detektiert wird, und dabei insbesondere dessen Vorderkante detektiert wird, und dass eine Zeitmessung erfolgt, mit der die Zeit bestimmt wird, bis das vorgerundete Blech elektrischen Kontakt mit einer Messplatte (38) hat.

19. Verfahren nach einem der Ansprüche 15 bis 18, wobei bei der Messung des Rundungsverhaltens mit Walzen (8, 9; 28, 29) und allenfalls mit einem auf die Walzen folgenden Flexerkeil (7; 37) auf das Blech eingewirkt wird.

20. Verfahren nach Anspruch 14, wobei aus einzelnen Blechabschnitten (1,2) Dosenzargen hergestellt werden, und bei welchem die einzelnen Blechabschnitte von einem Stapel (10) über eine Zuführstrecke (3) oder direkt einem Rundapparat (4) zugeführt und in diesem gerundet werden, wobei die Rundung mit einer Geschwindigkeit von 100 bis 450 m/Minute erfolgt und die gerundeten Behälterzargen-Rohlinge aus dem Rundapparat einer Schweissvorrichtung für Dosenzargen mit einer Z-Schiene zur Positionierung der Zargenkanten und Schweissrollen, insbesondere mit darauf laufenden Drahtzwischenelektroden, zugeführt werden, **dadurch gekennzeichnet, dass** vor und/oder in der Zuführstrecke (3) und/oder am oder im Rundapparat (4) die Blecheigenschaft gemessen wird, welche die Rundung beeinflusst, dass der Messwert oder ein davon abgeleiteter Wert der Steuerung (5) des Rundapparates (4) zugeführt wird, und dass der Rundapparat in Abhängigkeit von dem Messwert oder abgeleiteten Wert derart gesteuert wird, dass der Rundungsradius (R) der Zarge bei sich ändernder Blecheigenschaft im wesentlichen konstant gehalten wird.

21. Verfahren nach Anspruch 20, **dadurch gekennzeichnet, dass** als Blecheigenschaft das Rundungsverhalten gemessen wird, wobei die Messung im Rundungsbetrieb zerstörungsfrei an nacheinander folgenden Blechabschnitten durchgeführt wird und das Rundungsverhalten elektrisch und/oder mechanisch und/oder optisch und/oder akustisch gemessen wird und bei der Messung des Rundungsverhaltens mit Rundwalzen (8, 9; 28, 29) und allenfalls mit einem auf die Rundwalzen folgenden Keil (7; 37) auf das Blech eingewirkt wird.

## Claims

1. Rounding apparatus (4) for continuously rounding individual metal sheets by means of a rounding station (11, 12, 13, 14) and of a pre-rounding element (14) at the rounding station (11, 12, 13, 14), the pre-rounding element (14) comprising an essentially rigid upper element part (20) having fixation elements (26) for fixation to the rounding apparatus or being formed by a fixed part of the rounding apparatus, a lower element part (22) being provided for acting on the metal sheets to be rounded, **characterized in that** the pre-rounding element (14) comprises a joint arrangement (21) by means of which the lower element part (22) is connected to the upper element part (20), and comprising at least one actuating element (23) by means of which the lower element part is pivotable in such a way that the metal sheets to be rounded are differently pressurized by said lower element part.

2. Rounding apparatus (4) according to claim 1, **characterized in that** the lower element part (22) is essentially wedge-shaped.

3. Rounding apparatus (4) according to claim 1 or 2, **characterized in that** said actuating element (23) is provided for executing an essentially linear movement depending on an electrical input signal.

4. Rounding apparatus (4) according to one of the claims 1 to 3, **characterized in that** the joint arrangement (21) has a solid body articulation.

5. Rounding device (4) according to claim 4, **characterized in that** the upper element part (20) and the lower element part (22) are solidly connected to one another.

6. Rounding apparatus (4) according to claim 4, **characterized in that** the upper element part (20) and the lower element part (22) are connected to each other by a leaf spring arrangement.

7. Rounding apparatus (4) according to one of the claims 1 to 3, **characterized in that** the joint arrangement (21) has a turning knuckle with a rotation axle (21').

8. Rounding apparatus (4) according to one of the claims 1 to 7 and a control (5) for actuating said pre-rounding element (14) in dependency of an input value and/or a preset value or in dependency of a measurement value of the metal sheet property of single metal sheets to be rounded.

9. Rounding apparatus according to claim 8, wherein the rounding machine comprises, as elements for the rounding, rounding rollers (11, 12) and optionally a rounding wedge (13) as well as adjusting means for these elements, and wherein the rounding apparatus has a speed of 100 up to 450 meters per minute, **characterized in that** the pre-rounding element (14) is adjustable by the control (5) of the rounding apparatus by means of the actuating element (23), and **in that** the control (5) has an input for a measurement value of the metal sheet property or a value derived therefrom, and the rounding apparatus has a measurement device (27) by means of which the rounding behaviour is measured as metal sheet property, wherein the measurement is carried out in a non-destructive way during operation on consecutive sheet sections.

10. Rounding apparatus according to claim 9, **characterized in that** the rounding behaviour is electrically and/or mechanically and/or optically and/or acoustically measurable.

11. Rounding apparatus according to claim 10, **characterized in that** the rounding behaviour is measured electrically, such that a time measurement can be carried out for the passing metal sheet from a pre-determined position on, by means of which the time until the pre-rounded metal sheet has electrical contact with a measurement plate (38) is determinable.

12. Rounding apparatus according to claim 11, **characterized in that** the measurement plate (38) is divided in a plurality of measurement pieces (38a, 38b, 38c, 38d) lying side by side an being electrically isolated from each other.

13. Welding device for can bodies with a Z-rail for positioning the can body edges, and with welding rollers, particularly intermediary wire electrodes running on it, comprising a rounding apparatus according to one of claim 8 to 12.

14. Method of rounding metal sheets in a rounding apparatus in which each sheet is pressurized by a pre-rounding element (14) in the rounding station (11, 12, 13, 14) of the rounding apparatus and said pre-rounding element has a substantially fixed element upper part (20) with fixation means for fixation to the rounding apparatus, or said upper element part (20) is a fixed part of said rounding apparatus, a lower element part (22) being provided for acting on the metal sheets to be rounded in the rounding apparatus, **characterized in that** a joint arrangement (21) is provided, by means of which said element lower part is connected with said element upper part in an articulated way, at least an actuator (23) being provided, by means of which said element lower part is displaceable, controlled by a signal, wherein said signal is based on a measurement of a metal sheet property of the metal sheets to be rounded.

15. Method according to claim 14, **characterized in that** the rounding behaviour is measured as the metal sheet property, wherein the measurement is carried out in a non-destructive way during operation on consecutive sheet sections.

16. Method according to one of the claims 14 or 15, **characterized in that** the measurement is made in a flexing station of said rounding apparatus.

17. Method according to claim 15 or 16, **characterized in that** the rounding behaviour is measured electrically and/or mechanically and/or optically and/or acoustically.

18. Method according to claim 15, **characterized in that** the rounding behaviour is measured electrically by detecting said passing metal sheet at a pre-determined position, particularly by detecting the front edge of the metal sheet, at **in that** a time measurement is carried out, by means of which the time is measured until the pre-rounded metal sheet has electrical contact with a measurement plate (38).

19. Method according to one of the claims 15 to 18, wherein, during the measurement of the rounding behaviour, it is acted upon the metal sheet with rollers (8, 9; 28, 29) and optionally with a flexer wedge (7; 37) following the rollers.

20. Method according to claim 14, wherein can bodies are manufactured from single metal sheet sections (1, 2), and wherein said metal sheet sections are fed from a stack (10) via a feeding path (3), or directly, to a rounding apparatus (4) and are rounded therein, wherein the rounding is done with a speed of 100 up to 450 meters per minute and the rounded can body blanks are fed from said rounding apparatus into a welding device for can bodies having a Z-rail for positioning the can body edges and being provided with welding rollers, particularly intermediary wire electrodes running on said welding rollers, **characterized in that** in front of and/or within said feeding path (3) and/or on or within said rounding apparatus (4) the metal sheet property influencing the rounding is measured, **in that** the measurement value or a value derived therefrom is fed to the control (5) of the rounding apparatus (4), and **in that** the rounding apparatus is controlled in dependency of the measurement value or the value derived therefrom such that the rounding radius (R) of said can body is kept essentially constant while the metal sheet property is changing.

21. Method according to claim 20, **characterized in that** the rounding behaviour is measured as metal sheet property, wherein the measurement takes place in a non-destructive way during the rounding operation on consecutive metal sheet sections and the rounding behaviour is measured electrically and/or mechanically and/or optically and/or acoustically and, during measurement of the rounding behaviour, it is acted upon the metal sheet by means of rounding rollers (8, 9; 28, 29) and, as the case may be, with a rounding wedge (7; 37) following the rounding rollers.

## Revendications

1. Dispositif de cintrage (4) pour le cintrage de tôles individuelles pendant le passage, avec un poste de cintrage (11, 12, 13, 14) et un élément de pré-cintrage (14) du poste de cintrage (11, 12, 13, 14), l'élément de pré-cintrage (14) comportant une partie supérieure (20) de l'élément essentiellement fixe, ayant des moyens de fixation (26) pour la fixation au dispositif de cintrage, ou étant formé par une partie fixe par rapport au dispositif de cintrage, une partie inférieure (22) de l'élément prévue pour actionner sur les tôles à cintrer situées dans le dispositif de cintrage, **caractérisé en ce que** l'élément de pré-cintrage (14) comporte une charnière (21), par laquelle la partie inférieure (22) de l'élément est connectée de manière articulée à la partie supérieure (20) de l'élément, comportant aussi au moins un élément d'actionnement (23) par lequel la partie inférieure de l'élément est pivotable de sorte que les tôles à cintrer soient variablement pressurisées par ladite partie inférieure.

2. Dispositif de cintrage (4) selon la revendication 1, **caractérisé en ce que** la partie inférieure (22) de l'élément possède une forme essentiellement de cale.

3. Dispositif de cintrage (4) selon la revendication 1 ou 2, **caractérisé en ce que** l'élément d'actionnement (23) est formé pour effectuer un mouvement essentiellement linéaire en dépendance d'un signal d'entrée électrique.

4. Dispositif de cintrage (4) selon l'une des revendications 1 à 3, **caractérisé en ce que** la charnière (21) a une articulation à corps solide.

5. Dispositif de cintrage (4) selon la revendication 4, **caractérisé en ce que** la partie supérieure (20) de l'élément et la partie inférieure (22) de l'élément sont reliées en une seule pièce.

6. Dispositif de cintrage (4) selon la revendication 4, **caractérisé en ce que** la partie supérieure (20) de l'élément et la partie inférieure (22) de l'élément sont reliées par un arrangement de ressorts à lames.

7. Dispositif de cintrage (4) selon l'une des revendications 1 à 3, **caractérisé en ce que** la charnière (21) a une rotule avec un axe d'articulation (21').

8. Dispositif de cintrage (4) selon l'une des revendications 1 à 7 et une commande (5) pour actionner l'élément de pré-cintrage (14) en dépendance d'une valeur d'entrée et/ou d'une valeur prédéfinie ou en dépendance d'une valeur de mesure de la propriété de tôle des tôles individuelles à cintrer.

9. Dispositif de cintrage selon la revendication 8, la machine à cintrer comprenant comme éléments de cintrage des rouleaux de cintrage (11, 12) et, si nécessaire, une cale de cintrage (13) ainsi que des moyens d'ajustage pour ces éléments, et le dispositif de cintrage ayant une vitesse de 100 à 450 mètres par minute pour le cintrage, **caractérisé en ce que** l'élément de pré-cintrage (14) est ajustable par la commande (5) du dispositif de cintrage à l'aide de l'élément d'actionnement (23) et **en ce que** la commande (5) a une entrée pour une valeur de mesure de la propriété de tôle ou pour une valeur dérivée de ladite valeur de mesure et le dispositif de cintrage a une installation de mesure (27), à l'aide de laquelle le comportement de cintrage, comme propriété de tôle, est mesuré, la mesure étant effectuée de manière non-destructible à des sections de tôle successives.

10. Dispositif de cintrage selon la revendication 9, **caractérisé en ce que** le comportement de cintrage est électriquement et/ou mécaniquement et/ou optiquement et/ou acoustiquement mesurable.

11. Dispositif de cintrage selon la revendication 10, **caractérisé en ce que** le comportement de cintrage est mesuré électriquement de manière que, pendant le passage, un chronométrage peut être effectué à partir d'une position prédéfinie, ce qui permet de déterminer le temps, jusqu'à la tôle pré-cintrée a un contact électrique avec une plaque de mesure (38).

12. Dispositif de cintrage selon la revendication 11, **caractérisé en ce que** la plaque de mesure (38) est divisée en plusieurs parties de mesure (38a, 38b, 38c, 38d) voisines et électriquement isolées l'une par rapport à l'autre.

13. Dispositif de soudure pour corps de boîtes, avec une barre profilée en Z pour le positionnement des chants du corps et avec des rouleaux de soudure, particulièrement avec des fils électrodes qui passent là-dessus, comportant un dispositif de cintrage selon l'une des revendications 8 à 12.

14. Méthode pour le cintrage de tôles dans un dispositif de cintrage, pour laquelle chaque tôle est pressurisée avec un élément de pré-cintrage (14) dans le poste de cintrage (11, 12, 13, 14) du dispositif de cintrage et l'élément de pré-cintrage a une partie supérieure (20) de l'élément essentiellement fixe et avec des moyens de fixation pour la fixation au dispositif de cintrage ou la partie supérieure (20) de l'élément est une partie fixe du dispositif de cintrage, pour lequel une partie inférieure (22) de l'élément est prévue pour actionner sur les tôles à cintrer dans le dispositif de cintrage, **caractérisée en ce qu'**une charnière (21) est prévue, à l'aide de laquelle la partie inférieure de l'élément est connectée de manière articulée avec la partie supérieure de l'élément, ainsi qu'au moins un élément d'actionnement (23) est prévu, à l'aide duquel la partie inférieure de l'élément est pivotée, de manière commandée, par un signal, le signal étant basé sur une mesure d'une propriété de tôle des tôles à cintrer.

15. Méthode selon la revendication 14, **caractérisée en ce que** le comportement de cintrage est mesuré comme propriété de tôle, la mesure étant effectuée de manière non-destructible à des sections de tôle successives.

16. Méthode selon l'une des revendications 14 ou 15, **caractérisée en ce que** la mesure est effectuée dans un poste d'assouplissement du dispositif de cintrage.

17. Méthode selon la revendication 15 ou 16, **caractérisée en ce que** le comportement de cintrage est électriquement et/ou mécaniquement et/ou optiquement et/ou acoustiquement mesuré.

18. Méthode selon la revendication 15, **caractérisée en ce que** le comportement de cintrage est mesuré électriquement de manière que, pendant le passage de la tôle, la tôle est détectée dans une position prédéfinie, particulièrement son chant antérieur est détecté, et **en ce qu'**un chronométrage est effectué, par lequel le temps est déterminé, jusqu'à la tôle pré-cintrée a un contact électrique avec une plaque de mesure (38).

19. Méthode selon l'une des revendications 15 à 18, pour laquelle, pendant la mesure du comportement de cintrage, il est actionné sur la tôle par des rouleaux (8, 9 ; 28, 29) et, si nécessaire, avec une cale d'assouplissement (7; 37) qui suit les rouleaux.

20. Méthode selon la revendication 14, des corps de boîtes étant produits à partir des sections de tôles (1, 2) individuelles, et pour laquelle les sections de tôles individuelles sont fournies d'une pile (10), à travers d'un chemin de livraison (3) ou directement à un dispositif de cintrage (4) et sont cintrées dans le même, le cintrage étant effectué avec une vitesse de 100 à 450 mètres par minute et les corps de boîtes brutes étant fournies du dispositif de cintrage à un dispositif de soudure pour corps de boîtes avec une barre profilée en Z pour positionner les chants du corps et à des rouleaux de soudure, particulièrement avec des fils électrodes passant là-dessus, **caractérisée en ce que** la propriété de tôle qui influence le cintrage est mesurée avant et/ou sur le chemin de livraison (3) et/ou sur ou dans le dispositif de cintrage (4), **en ce que** la valeur de mesure ou une valeur dérivée de ladite valeur de mesure est fournie à la commande (5) du dispositif de cintrage (4), et **en ce que** le dispositif de cintrage est commandé en dépendance de la valeur de mesure ou de la valeur dérivée de ladite valeur de mesure de sorte que le radius de cintrage (R) du corps soit maintenu essentiellement constant lors que la propriété de tôle change.

21. Méthode selon la revendication 20, **caractérisée en ce que** le comportement de cintrage est mesuré comme propriété de tôle, la mesure étant effectuée de manière non-destructible pendant le processus de cintrage à des sections de tôle successives et le comportement de cintrage étant mesuré électriquement et/ou mécaniquement et/ou optiquement et/ou acoustiquement et un actionnement étant effectué sur la tôle pendant la mesure du comportement de cintrage à l'aide des rouleaux de cintrage (8, 9 ; 28, 29) et, si nécessaire, à l'aide d'une cale (7 ; 37) qui suit le rouleaux de cintrage.
